# EUROPÄISCHE PATENTSCHRIFT

(11) **EP 4 048 945 B1**
(45) Veröffentlichungstag und Bekanntmachung des Hinweises auf die Patenterteilung: **18.09.2024**
(21) Anmeldenummer: 20808008.5
(22) Anmeldetag: 16.10.2020
(51) Int. Cl.: F22B 37/24, F16M 7/00

(54) **AUFLAGERVORRICHTUNG, LASTKÖRPERANORDNUNG SOWIE VERFAHREN ZUM EINSTELLEN EINER AUF AUFLAGERVORRICHTUNGEN DER LASTKÖRPERANORDNUNG WIRKENDEN AUFLAGERKRAFT**
SUPPORTING DEVICE, LOAD BODY ASSEMBLY AND METHOD FOR ADJUSTING A SUPPORTING FORCE ACTING ON SUPPORTING DEVICES OF THE LOAD BODY ASSEMBLY
ENSEMBLE SUPPORT, ENSEMBLE CORPS DE CHARGE ET PROCÉDÉ POUR AJUSTER UNE FORCE DE SUPPORT S'EXERÇANT SUR DES ENSEMBLES SUPPORT DE L'ENSEMBLE CORPS DE CHARGE

(30) Priorität: 21.10.2019 DE 102019128381
(43) Veröffentlichungstag der Anmeldung: 31.08.2022
(73) Patentinhaber: Steinmüller Babcock Environment GmbH, 51643 Gummersbach (DE); Nippon Steel Engineering Co., Ltd., Shinagawa-ku Tokyo 141-8604 (JP)
(72) Erfinder: MIUNSKE, Frank, 51702 Bergneustadt (DE); MIUNSKE, Nico, 51580 Reichshof (DE)
(74) Vertreter: Bremer, Ulrich
(86) Internationale Anmeldenummer: PCT/DE2020/100896
(87) Internationale Veröffentlichungsnummer: WO 2021/078329

(56) Entgegenhaltungen:
- EP-A2- 0 294 732
- DE-A1- 2 546 890
- US-A- 5 257 668

## Beschreibung

Die Erfindung betrifft eine Auflagervorrichtung, eine Lastkörperanordnung sowie ein Verfahren zum Einstellen einer auf Auflagervorrichtungen der Lastkörperanordnung wirkenden Auflagerkraft.

Lastkörper, beispielsweise ein Kessel einer Verbrennungsanlage, insbesondere einer Müllverbrennungsanlage, können über mehrere Auflagervorrichtungen auf einem Untergrund bzw. einer Tragkonstruktion aus beispielsweise Stahlträgern gelagert werden. Die Lagerung kann hierbei hängend oder stehend erfolgen. Da alle damit in Verbindung stehenden Bauteile Toleranzen aufweisen, ist bei einer Lagerung über mehrere Auflagervorrichtungen nicht mehr sichergestellt, welche Auflagervorrichtung welche Lasten bzw. welche wirkenden Auflagerkräfte vom Kessel als Lastkörper auf die Tragkonstruktion überträgt.

In solchen Fällen werden herkömmlicherweise Tellerfedern bzw. Tellerfedersäulen zur Lastverteilung über die mehreren Auflagervorrichtung eingesetzt. Derartige Tellerfedern sind für einen hängenden Kessel beispielsweise in DE 29 19 210 C3 beschrieben. Die Tellerfedersäulen haben jedoch den Nachteil, dass außer über die automatische Einfederung nicht festgestellt werden kann, welche Last bzw. Auflagerkraft an den Lagerbereichen vorliegt, auf die der Kessel auf der jeweiligen Auflagervorrichtung aufliegend bzw. hängend einwirkt, und demnach welche Auflagerkraft von der jeweiligen Auflagervorrichtung über einen Lagerbereich auf die Tragkonstruktion übertragen wird.

Problematisch dabei ist, dass die Einfederung der Tellerfedersäulen kein sicheres Anzeichen für die wirkliche Belastung auf die jeweilige Auflagervorrichtung ist. Die tatsächliche Last bzw. wirkende Auflagerkraft, die an den Lagerbereichen vorhanden ist, hängt vielmehr sehr stark von der Geometrie sowie der Steifigkeit der betreffenden Bauteile und der Elastizität der Tragkonstruktion ab.

In DE 10 2013 005 569 A1 ist ein Verfahren beschrieben, mit dem die auf die Tellerfedern wirkende Auflagerkraft über eine Druckmessdose gemessen und unter Zuhilfenahme eines drehmomentgesteuerten Schraubers eingestellt werden kann. Das Bauteil bzw. der Lastkörper ist dazu an mehreren Auflagervorrichtungen über einen Anker hängend gelagert, wobei der Anker über eine Mutter (bzw. Spezialmutter) einer nachträglich auf den Anker aufsetzbaren Lasteinstellungsanordnung angehoben oder abgesenkt werden kann. Demnach wird ein Abstand zwischen dem Lastkörper (Kessel) und der Auflagevorrichtung bzw. dem zweiten Lagerbereich, auf die der Lastkörper hängend einwirkt, angepasst, um die Auflagerkraft einzustellen. Durch eine Verstellung der Mutter kann über die Druckmessdose ein Sollwert für die wirkende Ankerlast bzw. Auflagerkraft eingestellt werden.

EP 0 294 732 A2 beschreibt eine gattungsgemäße Auflagervorrichtung, wobei über Verstellelemente ein Abstand in vertikaler Richtung zwischen der Unterkonstruktion und der Mittelkonstruktion verstellbar ist und über die Lastelemente ein über die Verstellelemente eingestellter Abstand zwischen der Unterkonstruktion und der Mittelkonstruktion fixiert werden kann. Weitere Auflagervorrichtungen sind in US 5 257 668 A und DE 25 46 890 A1 beschrieben.

Es ist Aufgabe der Erfindung, eine Auflagervorrichtung bereitzustellen, mit der in einfacher und zuverlässiger Weise eine Einstellung bzw. Feststellung einer wirkenden Auflagerkraft ermöglicht werden kann. Aufgabe der Erfindung ist weiterhin eine Lastkörperanordnung sowie ein Verfahren zum Einstellen einer wirkenden Auflagerkraft anzugeben.

Diese Aufgabe wird durch eine Auflagervorrichtung nach Anspruch 1 sowie eine Lastkörperanordnung und ein Verfahren gemäß den weiteren unabhängigen Ansprüchen gelöst. Bevorzugte Weiterbildungen sind in den Unteransprüchen angegeben.

Erfindungsgemäß ist demnach eine Auflagervorrichtung zum stehenden Lagern eines Lastkörpers, beispielsweise eines Kessels, insbesondere eines Kessels einer Müllverbrennungsanlage, bzw. bei Körpern, die durch ihre Last die Unterkonstruktion verformen, und wo es durch diese Verformung zu Lastverlagerungen kommen kann, vorgesehen, die eine Unterkonstruktion und eine demgegenüber in vertikaler Richtung verstellbare Mittelkonstruktion aufweist, wobei die Unterkonstruktion mit einem ersten Lagerbereich zusammenwirkt zum Ableiten einer von dem Lastkörper über einen zweiten Lagerbereich in die Mittelkonstruktion einleitbaren Auflagerkraft in die Tragkonstruktion. Die Auflagervorrichtung umfasst Lastelemente und Verstellelemente. Dabei ist die in die Mittelkonstruktion einleitbare Auflagerkraft über die Lastelemente und/oder über die Verstellelemente in vertikaler Richtung auf die Unterkonstruktion übertragbar, wobei über die Verstellelemente ein Abstand in vertikaler Richtung zwischen der Unterkonstruktion und der Mittelkonstruktion verstellbar ist und über die Lastelemente ein über die Verstellelemente eingestellter Abstand zwischen der Unterkonstruktion und der Mittelkonstruktion vorzugsweise durch Formschluss fixiert werden kann zum Festlegen der auf die Auflagervorrichtung wirkenden Auflagerkraft bzw. der in den zweiten Lagerbereich in die Mittelkonstruktion eingeleiteten und über die Unterkonstruktion abgeleiteten Auflagerkraft.

Vorteilhafterweise lässt sich also über die Verstellelemente ein Abstand zwischen der Mittelkonstruktion und der Unterkonstruktion einstellen, was unmittelbare Auswirkungen auf die wirkende und übertragene Auflagerkraft hat, da sich dadurch der Abstand zwischen dem Lastkörper und der Tragkonstruktion ändert. Im Gegensatz zum Stand der Technik wird dabei allerdings nicht der Abstand zwischen dem Lastkörper und der Auflagevorrichtung bzw. dem zweiten Lagerbereich anpasst, um die Auflagerkraft einzustellen, sondern der Abstand zwischen der Mittelkonstruktion und der Unterkonstruktion. Treten also Toleranzen auf, kann über eine Einstellung des Abstandes die wirkende Auflagerkraft über die Verstellelemente in einfacher Weise verändert bzw. angepasst werden. Die darüber eingestellte Auflagerkraft kann dann über die Lastelemente festgelegt werden, indem der Abstand über diese fixiert wird.

Demnach kann in einem zweistufigen Verfahren zunächst eine Einstellung des Abstandes bzw. einer wirkenden Auflagerkraft und anschließend eine Fixierung des Abstandes erfolgen. Dazu ist keine nachträglich aufsetzbare Lasteinstellungsanordnung wie im Stand der Technik nötig, da die jeweiligen Bestandteile bereits in der Auflagervorrichtung integriert sind und auch im Betrieb für eine Kraftübertragung verwendet werden. Die Einstellung und Fixierung kann dabei vorteilhafterweise im montierten Zustand erfolgen, um die tatsächlich im Betrieb wirkenden Kräfte unter Berücksichtigung von Toleranzen bei der Einstellung und Fixierung berücksichtigen zu können.

Erfindungsgemäß ist vorgesehen, dass die Lastelemente jeweils durch ein mit der Mittelkonstruktion fest verbundenen Last-Gewindebolzen ausgebildet sind, wobei der Last-Gewindebolzen verschieblich in einem Loch in der Unterkonstruktion gelagert ist und der zum Fixieren des Abstandes formschlüssig mit der Unterkonstruktion verbindbar ist. In analoger Weise kann der Last-Gewindebolzen aber auch fest mit der Unterkonstruktion verbunden und verschieblich in einem Loch in der Mittelkonstruktion gelagert sein, wobei zum Fixieren des Abstandes dann eine formschlüssige Verbindung zur Mittelkonstruktion ausgebildet werden kann. Grundsätzlich kann zum Fixieren des Abstandes aber auch das Ausbilden einer derartigen formschlüssigen Verbindung sowohl zur Mittelkonstruktion als auch zur Unterkonstruktion vorgesehen sein.

Durch diese Maßnahmen kann der eingestellte Abstand zwischen der Mittelkonstruktion und der Unterkonstruktion in einfacher Weise fixiert werden. Vorzugsweise kann dabei vorgesehen sein, dass die formschlüssige Verbindung zum Fixieren des Abstandes über auf dem Last-Gewindebolzen aufgeschraubte Muttern bewirkt wird, wobei die Muttern die Unterkonstruktion und/oder die Mittelkonstruktion (je nach Ausführung) zwischen sich einschließen zum Verhindern einer Bewegung der Unterkonstruktion und/oder der Mittelkonstruktion gegenüber der Mittelkonstruktion bzw. der Unterkonstruktion in vertikaler Richtung. Durch die Schrauben wird eine einfache Möglichkeit des Ausbildens der formschlüssigen Verbindung angegeben.

Vorzugsweise ist weiterhin vorgesehen, dass die Verstellelemente jeweils durch einen in eine Gewindebohrung in der Mittelkonstruktion eingeschraubten Verstell-Gewindebolzen ausgebildet sind, wobei der Verstell-Gewindebolzen durch eine Verdrehung gegenüber der Gewindebohrung mit einem unteren Ende in vertikaler Richtung mit einer Verstellkraft auf die Unterkonstruktion einwirken kann. Durch eine Verdrehung kann also in einfacher Weise eine gezielte Verstellung des Abstandes zwischen der Unterkonstruktion und der Mittelkonstruktion in Abhängigkeit der wirkenden Verstellkraft gewährleistet werden, insofern keine Fixierung des Abstandes über die Lastelemente erfolgt. Zudem kann ein Teil der wirkenden Auflagekraft bei fixiertem Abstand auch über die Verstellelemente auf die Unterkonstruktion übertragen werden.

Bevorzugt kann das untere Ende des Verstell-Gewindebolzens über ein flächiges, vorzugsweise plattenförmiges Lagerelement mit der Verstellkraft auf die Unterkonstruktion einwirken, so dass vorteilhafterweise ein flächiges Verteilen der wirkenden Verstellkraft bzw. Auflagerkraft erfolgt, was die Kraftübertragung insgesamt optimiert.

Vorzugsweise ist außerdem vorgesehen, dass die auf die Unterkonstruktion einwirkende Verstellkraft über einen zwischen dem flächigen, z.B. plattenförmigen Lagerelement und der Unterkonstruktion einbringbaren Kraftmesser messbar ist. Dadurch wird vorteilhafterwiese eine gezielte Verstellung des Abstandes zum Einstellen einer festgelegten Vorgabekraft für jede Auflagervorrichtung ermöglicht. Der Abstand zwischen der Unterkonstruktion und der Mittelkonstruktion kann also derartig über die Verstellelemente eingestellt und die Lastelemente fixiert werden, dass die auf die Auflagervorrichtung wirkende Auflagerkraft einer festgelegten Vorgabekraft entspricht.

Eine einfache und genaue Einstellung des Abstandes wird dabei ermöglicht, indem ein oberes Ende des Verstell-Gewindebolzens Einkerbungen aufweist zum Aufnehmen eines Schraubers zum Verdrehen des Verstell-Gewindebolzens mit einem einstellbaren Drehmoment zum gezielten Einstellen der Verstellkraft.

Vorzugsweise ist weiterhin vorgesehen, dass an der Mittelkonstruktion untere vertikale Elemente und ergänzend ein unteres vertikales Rückenelement angeordnet sind, wobei die unteren vertikalen Elemente mit einem unteren Ende in einen zwischen Stegen ausgebildeten unteren Zwischenraum in der Unterkonstruktion ragen und darin in vertikaler Richtung, vorzugsweise ausschließlich in vertikaler Richtung, beweglich aufgenommen sind zum Beschränken einer horizontalen Bewegung der Unterkonstruktion gegenüber der Mittelkonstruktion. Damit kann in einfacher Weise eine relative Bewegung in der horizontalen Ebene verhindert werden, da das untere Ende der unteren vertikalen Elemente in der horizontalen Ebene in einer Querrichtung von den Stegen und in einer Längsrichtung durch einen plattenförmigen Bereich der Unterkonstruktion an einer Bewegung gehindert ist. Dadurch können horizontale Kräfte in einfacher Weise aufgenommen werden.

Vorzugsweise ist außerdem vorgesehen, dass an einer Unterseite der Unterkonstruktion ein Kalottenlager angeordnet ist und die Unterkonstruktion über das Kalottenlager mit dem ersten Lagerbereich zusammenwirkt zum Aufnehmen von Bewegungen aus Wärmedehnungen oder Verformungen in der Umgebung des ersten Lagerbereiches. Dadurch können umgebungsbedingt auftretende Veränderungen in einfacher Weise ausgeglichen werden, so dass Verspannungen oder Beschädigungen vermieden werden können.

Vorzugsweise sind an der Mittelkonstruktion weiterhin in vertikaler Richtung nach oben abragende obere vertikale Elemente und ergänzend ein oberes vertikales Rückenelement angeordnet, die mit einer horizontal verlaufenden Oberkonstruktion verbunden sind. Diese umgeben ein oberes Ende des Verstell-Gewindebolzens zumindest teilweise, so dass ein Aufnahmebereich für einen Schrauber zum Verstellen des Verstell-Gewindebolzens bereitgestellt werden kann.

Weiterhin ist vorgesehen, dass die Oberkonstruktion mit einem Auflageträger verbunden ist, wobei der zweite Lagerbereich für den Lastkörper auf dem Auflageträger angeordnet ist zum Einleiten einer vom Lastkörper ausgehenden Auflagerkraft in die Auflagervorrichtung. Damit wird mit dem Auflageträger, der Oberkonstruktion und den oberen vertikalen Elementen sowie dem oberen vertikalen Rückenelement eine robuste konstruktive Anordnung bereitgestellt, die ein einfaches und sicheres Übertragen der über den zweiten Lagerbereich eingeleiteten Auflagerkraft in die Mittelkonstruktion ermöglicht und gleichzeitig Raum für eine einfache und kontrollierte Verstellung des Verstell-Gewindebolzens bietet.

In einer erfindungsgemäßen Lastkörperanordnung mit einem Lastkörper, beispielsweise ein Kessel, insbesondere ein Kessel einer Müllverbrennungsanlage, mehreren Auflagervorrichtungen, insbesondere erfindungsgemäßen Auflagervorrichtungen, und einer Tragkonstruktion, beispielsweise einem Stützträger, ist vorgesehen, dass der Lastkörper mit einer Auflagerkraft über zweite Lagerbereiche auf die mehreren Auflagervorrichtungen einwirkt, wobei die Auflagervorrichtungen jeweils eine Unterkonstruktion und eine demgegenüber in vertikaler Richtung verstellbare Mittelkonstruktion aufweisen, wobei die Unterkonstruktion mit einem ersten Lagerbereich zusammenwirkt zum Ableiten der in die Mittelkonstruktion der jeweiligen Auflagervorrichtung über den jeweiligen zweiten Lagerbereich eingeleiteten Auflagerkraft in die Tragkonstruktion, wobei die Auflagervorrichtung mit dem ersten Lagerbereich auf der Tragkonstruktion aufliegt. Die jeweilige Auflagervorrichtung umfasst Lastelemente und Verstellelemente. Die in die Mittelkonstruktion der jeweiligen Auflagervorrichtung eingeleitete Auflagerkraft ist dabei über die Lastelemente und/oder über die Verstellelemente in vertikaler Richtung auf die Unterkonstruktion der jeweiligen Auflagervorrichtung übertragbar, wobei über die Verstellelemente ein Abstand in vertikaler Richtung zwischen der Unterkonstruktion und der Mittelkonstruktion der jeweiligen Auflagervorrichtung verstellbar ist und über die Lastelemente ein über die Verstellelemente eingestellter Abstand zwischen der Unterkonstruktion und der Mittelkonstruktion der jeweiligen Auflagervorrichtung fixiert werden kann zum individuellen Einstellen und Festlegen der von dem Lastkörper auf die jeweilige Auflagervorrichtung der Lastkörperanordnung einwirkenden Auflagerkraft.

Vorzugsweise ist dabei vorgesehen, dass bei Notwendigkeit die mehreren Auflagervorrichtungen über Abhebesicherungen vor einem Abheben in vertikaler Richtung von der Tragkonstruktion gesichert werden können, beispielsweise über T-förmige Elemente, die an der Tragkonstruktion befestigt sind und Stege der Unterkonstruktion überdecken. Bei Vorliegen von abhebenden Kräften in der Lastkörperanordnung kann darüber ein Umkippen oder Abheben der Auflagervorrichtungen in einfacher Weise verhindert werden.

Vorzugsweise ist außerdem vorgesehen, dass die mehreren Auflagervorrichtungen jeweils ein Kalottenlager aufweisen, wobei das Kalottenlager den Übergang zur Tragkonstruktion im ersten Lagerbereich bildet. Die Auflagervorrichtungen übertragen also die Auflagerkraft jeweils über das Kalottenlager in die Tragkonstruktion, wodurch Wärmedehnungen oder Verformungen in der Umgebung des ersten Lagerbereiches aufgenommen werden können.

In einem erfindungsgemäßen Verfahren zum Einstellen einer auf Auflagervorrichtungen einer erfindungsgemäßen Lastkörperanordnung wirkenden Auflagerkraft sind mindestens die folgenden Schritte vorgesehen:
- Verstellen eines Abstands in vertikaler Richtung zwischen der Unterkonstruktion und der Mittelkonstruktion der jeweiligen Auflagervorrichtung über die Verstellelemente derartig, dass die von dem Lastkörper über den zweiten Lagerbereich in die jeweilige Auflagervorrichtung eingeleitete Auflagerkraft einer vorab für die jeweilige Auflagervorrichtung festgelegten Vorgabekraft entspricht;
- Fixieren des über die Verstellelemente eingestellten Abstandes zwischen der Unterkonstruktion und der Mittelkonstruktion der jeweiligen Auflagervorrichtung über die Lastelemente, wenn die Auflagerkraft mit einer gewissen Toleranz der Vorgabekraft entspricht zum Festlegen der von dem Lastkörper in die jeweilige Auflagervorrichtung der Lastkörperanordnung eingeleiteten Auflagerkraft.

Damit wird in diesem zweistufigen Verfahren die feste Einstellung einer vorab festgelegten Auflagerkraft für jede Auflagervorrichtung der Lastkörperanordnung ermöglicht. Die Einstellung erfolgt dabei für jede Auflagervorrichtung in abgestimmter Art und Weise, da sich die Einstellungen benachbarter Auflagervorrichtungen beeinflussen können. Demnach ist vor der Fixierung eine Überprüfung sinnvoll, ob die eingeleitete Auflagerkraft einer Auflagervorrichtung noch immer der festgelegten Vorgabekraft entspricht, nachdem zumindest eine oder alle benachbarten Auflagervorrichtungen ebenfalls ihre Einstellungen vorgenommen haben.

Vorzugsweise ist vorgesehen, dass die in die Mittelkonstruktion der jeweiligen Auflagervorrichtung eingeleitete Auflagerkraft beim Verstellen des Abstandes über die Verstellelemente lediglich über die Verstellelemente in vertikaler Richtung auf die Unterkonstruktion der jeweiligen Auflagervorrichtung übertragen wird, wobei die über die Verstellelemente in vertikaler Richtung auf die Unterkonstruktion übertragene Auflagerkraft beim Verstellen des Abstandes als Verstellkraft von einem Kraftmesser gemessen und die Verstellkraft mit der Vorgabekraft gemäß einem Soll-Ist-Abgleich verglichen wird. Demnach werden die Lastelemente der jeweiligen Auflagervorrichtung derartig eingestellt, dass über diese keine Last zwischen der Mittelkonstruktion und der Unterkonstruktion übertragen wird. Nur so kann sichergestellt werden, dass die wirkende Last von dem Kraftmesser gemessen und der Abstand entsprechend der Vorgabe eingestellt werden kann.

Vorzugsweise ist vorgesehen, dass der Kraftmesser vor dem Verstellen des Abstands zwischen die Unterkonstruktion und die Mittelkonstruktion der jeweiligen Auflagervorrichtung gebracht wird, wobei dazu eine Bewegung zwischen der Unterkonstruktion und der Mittelkonstruktion eingeschränkt und die in die Mittelkonstruktion der jeweiligen Auflagervorrichtung eingeleitete Auflagerkraft zunächst ausschließlich über die Lastelemente in vertikaler Richtung auf die Unterkonstruktion der jeweiligen Auflagervorrichtung übertragen wird, und der Kraftmesser nach dem Fixieren des über die Verstellelemente eingestellten Abstandes zwischen der Unterkonstruktion und der Mittelkonstruktion der jeweiligen Auflagervorrichtung durch einen Dummy ersetzt wird, wobei dazu die in die Mittelkonstruktion der jeweiligen Auflagervorrichtung eingeleitete Auflagerkraft ausschließlich über die Lastelemente und nicht über die Verstellelemente in vertikaler Richtung auf die Unterkonstruktion der jeweiligen Auflagervorrichtung übertragen wird.

Durch eine entsprechend wechselseitige Anwendung der Lastelemente und der Verstellelemente kann also gezielt eingestellt werden, wie die Last zwischen der Mittelkonstruktion und der Unterkonstruktion übertragen wird. Dies kann in vorteilhafter Weise dazu verwendet werden, eine variable Einstellung des Abstandes vorzunehmen (nur Verstellelemente) bzw. die Last im Betrieb dauerhaft zu übertragen (nur Lastelemente ggf. in Kombination mit den Verstellelementen). Die nachträgliche Einbringung des Kraftmessers nur für den Einstellvorgang ermöglicht es, den Kraftmesser nicht unnötig während des Betriebes nach der erfolgten Einstellung zu belasten. Grundsätzlich kann dieser aber auch dauerhaft Bestandteil der Auflagervorrichtung sein.

Erfindungsgemäß ist weiterhin vorgesehen, dass der über die Verstellelemente eingestellte Abstand zwischen der Unterkonstruktion und der Mittelkonstruktion der jeweiligen Auflagervorrichtung über die Lastelemente fixiert wird, indem nach dem Einstellen des Abstandes zwischen den Lastelementen und der Unterkonstruktion und/oder zwischen den Lastelementen und der Oberkonstruktion eine formschlüssige Verbindung ausgebildet wird. Dadurch kann die Fixierung wie bereits beschrieben in einfacher Weise durch Ausbilden eines Formschlusses, z.B. über Muttern, erreicht werden.

Nach dem Fixieren des Abstandes wird die in die Mittelkonstruktion der jeweiligen Auflagervorrichtung eingeleitete Auflagerkraft sowohl über die Lastelemente als auch über die Verstellelemente in vertikaler Richtung auf die Unterkonstruktion der jeweiligen Auflagervorrichtung übertragen, um eine Übertragung der Last zu optimieren. Grundsätzlich kann die Übertragung über die Verstellelemente aber auch entfallen, so dass lediglich die Lastelemente dazu beitragen, dass die eingestellte Auflagerkraft vom zweiten Lagerbereich in den ersten Lagerbereich überführt wird.

Die Erfindung wird im Folgenden anhand von einigen Ausführungsbeispielen näher erläutert. Es zeigen:
- Fig. 1: einen auf mehreren Lagerpunkten stehend gelagerten Lastkörper;
- Fig. 2: eine Auflagervorrichtung zum Lagern des Lastkörpers gemäß Fig. 1;
- Fig. 3a-d: Detailansichten der Auflagervorrichtung gemäß Fig. 2; und
- Fig. 4: ein Flussdiagramm zur Durchführung eines erfindungsgemäßen Verfahrens.

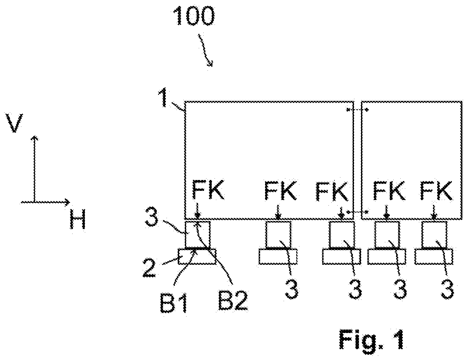

In Figur 1 ist ein Lastkörper 1, beispielsweise ein Kessel, dargestellt, der auf einer Trägerkonstruktion aus mehreren Stützträgern 2, die auch miteinander verbunden sein können, abgestützt ist. Grundsätzlich kann der Lastkörper 1 aber auch auf einem anderen Untergrund abgestützt sein. Zum Lagern des Lastkörpers 1 sind mehrere Auflagervorrichtungen 3 vorgesehen, die jeweils einen ersten Lagerbereich B1 und einen zweiten Lagerbereich B2 aufweisen. Auf dem zweiten Lagerbereich B2 liegt der Lastkörper 1 auf und der erste Lagerbereich B1 dient als Übergang zum Stützträger 2. Die Last des Lastkörpers 1 wird demnach über den zweiten Lagerbereich B2 anteilig in die jeweilige Auflagervorrichtung 3 eingeleitet die diese wiederum über den ersten Lagerbereich B1 in den jeweiligen Stützträger 2 ableitet. Der Anteil der in die jeweilige Auflagervorrichtung 3 eingeleiteten Last bzw. Auflagerkraft FK kann dabei variabel eingestellt werden.

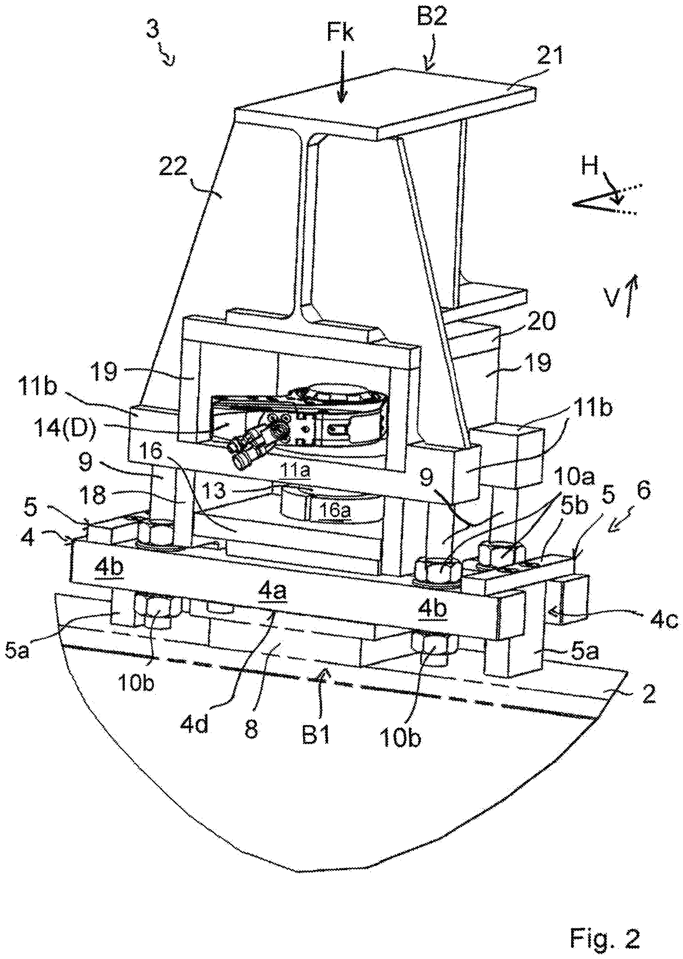

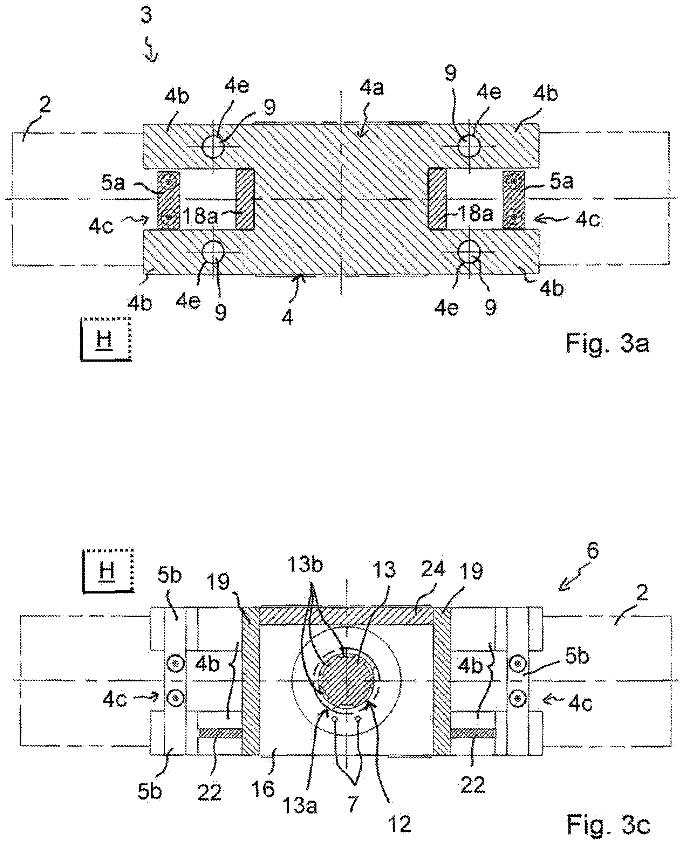

In Fig. 2 ist eine Auflagervorrichtung 3 in einer perspektivischen Ansicht dargestellt. Demnach weist die Auflagervorrichtung 3 eine Unterkonstruktion 4 auf, die in einer horizontalen Ebene H verläuft und die gemäß dieser Ausführungsform aus einem plattenförmigen unteren Bereich 4a mit senkrecht nach außen abstehenden unteren Stegen 4b besteht. Wie in Fig. 3a dargestellt, sind auf jeder Seite des plattenförmigen unteren Bereiches 4a zwei parallel zueinander verlaufende untere Stege 4b vorgesehen, die beabstandet zueinander sind, so dass ein unterer Zwischenraum 4c ausgebildet wird.

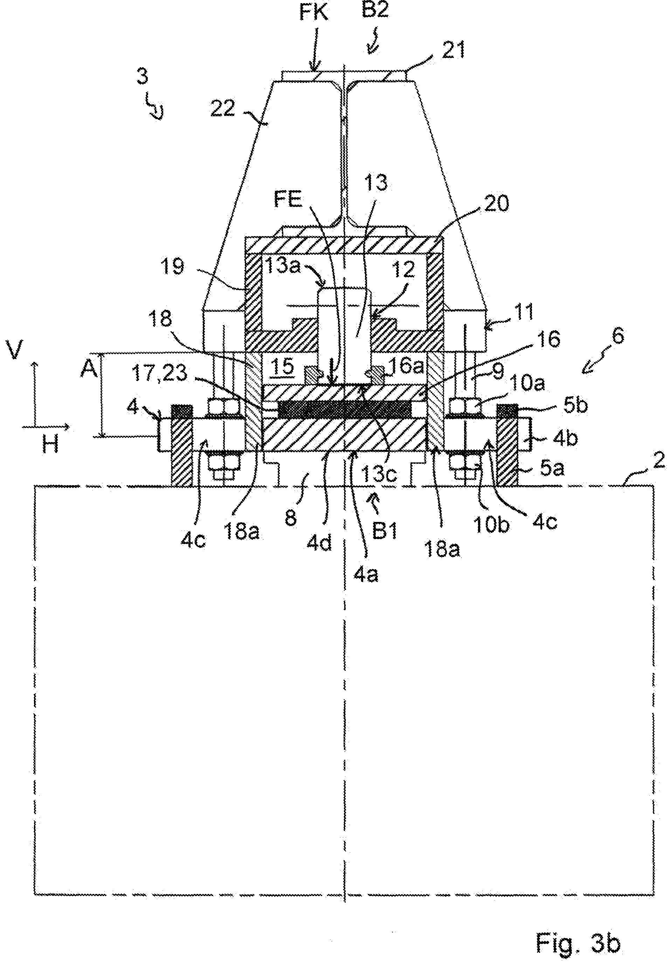

In dem unteren Zwischenraum 4c sind gemäß Fig. 2 und der Schnittdarstellung in Fig. 3b auf jeder Seite T-förmige Elemente 5 positioniert, die jeweils über einen vertikalen Schenkel 5a an dem Stützträger 2 befestigt sind. Der vertikale Schenkel 5a ragt derartig durch den unteren Zwischenraum 4c, dass ein horizontaler Schenkel 5b des T-förmigen Elementes 5 beide unteren Stege 4b der Unterkonstruktion 4 überdeckt (s. Fig. 3c). Dadurch kann ein Abheben der Unterkonstruktion 4 vom Stützträger 2 in vertikaler Richtung V im Betrieb verhindert werden. Ein geringfügiges Abheben kann bis zu einem gewissen Grad zugelassen werden, um z.B. Verspannungen aufgrund einer Wärmeausdehnung zu vermeiden. Die T-förmigen Elemente 5 dienen damit als Abhebesicherung 6. Diese Abhebesicherung 6 kann ggf. entfallen, wenn sichergestellt ist, dass es zu keinen abhebenden Kräften in vertikaler Richtung V kommt.

Die Unterkonstruktion 4 ist auf ihrer Unterseite 4d mit einen Kalottenlager 8 versehen, über das der Kontakt zum Stützträger 2 hergestellt wird (erster Lagerbereich B1). Dieses Kalottenlager 8 wird benötigt, um mögliche Bewegungen aus Wärmedehnungen oder Verformungen des Stützträgers 2 und/oder der Unterkonstruktion 4 aufzunehmen. Das Kalottenlager 8 weist dabei wie üblich Gleitbleche, Gleitscheiben und Kalotten (nicht dargestellt) auf, durch die eine Bewegung in alle Raumrichtungen aufgenommen werden kann.

Weiterhin sind vier Last-Gewindebolzen 9 vorgesehen, die durch Löcher 4e (s. Fig. 3a) in den abstehenden unteren Stegen 4b der Unterkonstruktion 4 verlaufen und darin in vertikaler Richtung V (auf- und ab-)beweglich gelagert sind. Auf die Last-Gewindebolzen 9 ist jeweils eine obere Mutter 10a und eine untere Mutter 10b aufgeschraubt, die oberhalb bzw. unterhalb der Unterkonstruktion 4 liegen und die Unterkonstruktion 4 damit zwischen sich einschließen. Durch ein entsprechendes Anziehen der Muttern 10a, 10b kann die Bewegung zwischen dem jeweiligen Last-Gewindebolzen 9 und der Unterkonstruktion 4 eingeschränkt bzw. unterbunden, d.h. durch diese Lastelemente 4e, 9, 10a, 10b eine formschlüssige Verbindung ausgebildet werden.

Die Last-Gewindebolzen 9 sind gemäß Fig. 2 und 3b jeweils an einer Mittelkonstruktion 11 befestigt, so dass sich durch eine Verschiebung der Last-Gewindebolzen 9 in den Löchern 4e der Unterkonstruktion 4 eine Relativbewegung zwischen der Unterkonstruktion 4 und der Mittelkonstruktion 11 in vertikaler Richtung V ergibt. Durch ein Festziehen der Muttern 10a, 10b kann die Lage bzw. der Abstand Ader Unterkonstruktion 4 relativ zur Mittelkonstruktion 11 entsprechend durch den ausgebildeten Formschluss fixiert bzw. eingestellt werden. Die Mittelkonstruktion 11 ist vergleichbar zur Unterkonstruktion 4 ausgeführt und weist einen plattenförmigen mittleren Bereich 11a und senkrecht davon abstehende mittlere Stege 11b auf. Die Last-Gewindebolzen 9 sind jeweils an den mittleren Stegen 11b befestigt.

Grundsätzlich kann der Aufbau auch derartig ausgeführt sein, dass der Last-Gewindebolzen 9 an der Unterkonstruktion 4 befestigt ist und in Löchern an den mittleren Stegen 11b der Mittelkonstruktion 11 verschieblich gelagert ist und eine formschlüssige Verbindung mit der Mittelkonstruktion 11 über Muttern in analoger Weise ausgebildet werden kann. Auch dadurch kann der Abstand A zwischen der Unterkonstruktion 4 und der Mittelkonstruktion 11 fixiert werden.

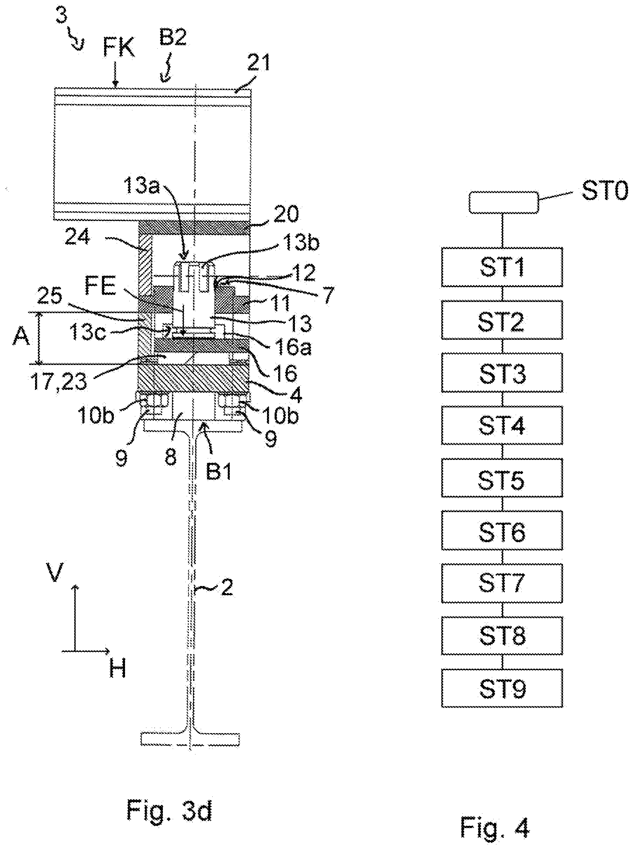

Im Zentrum der Mittelkonstruktion 11 ist im plattenförmigen mittleren Bereich 11a eine Gewindebohrung 12 angeordnet, in die ein Verstell-Gewindebolzen 13 eingeschraubt ist. Der Verstell-Gewindebolzen 13 ist an seinem oberen Ende 13a mit Einkerbungen 13b versehen (s. Fig. 3c, 3d). In diese Einkerbungen 13b kann ein Schrauber 14 z.B. der Fa. HYTORC eingreifen, um ein gezieltes Verdrehen des Verstell-Gewindebolzens 13 in der Gewindebohrung 12 zu erreichen. Damit können hohe Drehmomente D von bis zu 22 kNm auf den Verstell-Gewindebolzen 13 ausgeübt werden. Als Gegenlager für den Schrauber 14 sind an der Mittelkonstruktion 11 zwei Haltebolzen 7 angeordnet (s. Fig. 3c, 3d), in die der Schrauber 14 eingesteckt werden kann, so dass dieser bei der Betätigung sicher gehalten werden kann.

Ein unteres Ende 13c des Verstell-Gewindebolzens 13 ragt durch die Gewindebohrung 12 in einen Verstellbereich 15. Im Verstellbereich 15 ist ein plattenförmiges Lagerelement 16 angeordnet, auf das das untere Ende 13c des Verstell-Gewindebolzens 13 in vertikaler Richtung V mit einer Verstellkraft FE einwirken kann. Bewegt sich der Verstell-Gewindebolzen 13 durch eine entsprechende Verdrehung in der Gewindebohrung 12 in vertikaler Richtung V nach unten, so drückt das untere Ende 13c das plattenförmige Lagerelement 16 mit der Verstellkraft FE nach unten. Bei einer umgekehrten Verdrehung des Verstell-Gewindebolzens 13 hebt das untere Ende 13c vom Lagerelement 16 ab oder nimmt dieses mit, falls eine entsprechende Anbindung 16a zu diesem vorgesehen ist.

Der Verstellbereich 15 ist nach unten durch die Unterkonstruktion 4 begrenzt, so dass die über den Verstell-Gewindebolzen 13 variabel einstellbare Verstellkraft FE über das Lagerelement 16 auch auf den plattenförmigen unteren Bereich 4a der Unterkonstruktion 4 einwirkt. Die von dem Lagerelement 16 auf die Unterkonstruktion 4 wirkende Verstellkraft FE kann von einem Kraftmesser 17 aufgenommen werden, der zwischen das Lagerelement 16 und die Unterkonstruktion 4 eingebracht werden kann. Durch diese genannten Verstellelemente 12, 13, 13c, 16, 17, 23 kann eine Einstellung der auf die jeweilige Auflagervorrichtung 3 wirkenden Auflagerkraft FK erfolgen, wie später noch erläutert.

Der Verstellbereich 15 ist gemäß Fig. 2 und Fig. 3b seitlich durch zwei untere vertikale Elemente 18, die zusätzlich der Führung dienen, und gemäß Fig. 3d nach hinten durch ein unteres vertikales Rückenelement 25 begrenzt, die jeweils an der Mittelkonstruktion 11 befestigt sind. Die unteren vertikalen Elemente 18 ragen jeweils mit einem unteren Ende 18a, das verengt ist, in den unteren Zwischenraum 4c zwischen den unteren Stegen 4b der Unterkonstruktion 4 (s. Fig. 3a, 3b). Dadurch wird eine Bewegung der Unterkonstruktion 4 gegenüber der Mittelkonstruktion 11 in der horizontalen Ebene H vermieden. Horizontal wirkende Kräfte werden dadurch abgefangen und über die unteren vertikalen Elemente 18 abgeleitet.

Weiterhin sind an der Mittelkonstruktion 11 zwei obere vertikale Elemente 19 und ein oberes vertikales Rückenelement 24 angeordnet, die in vertikaler Richtung V nach oben von dieser abragen. Die unteren und die oberen vertikalen Elemente 18, 19 bzw. Rückenelemente 24, 25 können einteilig mit der Mittelkonstruktion 11 gefertigt sein. Es ist aber auch eine mehrteilige Fertigung möglich, bei der die einzelnen Elemente 11, 18, 19, 24, 25 nachträglich fest miteinander verbunden werden. Über die oberen vertikalen Elemente 19 und das obere vertikale Rückenelement 24 ist die Mittelkonstruktion 11 mit einer plattenförmigen Oberkonstruktion 20 verbunden, die wiederum über einen Auflageträger 21 die Anbindung zum zweiten Lagerbereich B2 herstellt. Ergänzend sind Rippen 22 zwischen der Mittelkonstruktion 11, den oberen vertikalen Elementen 19, der Oberkonstruktion 20 und dem Auflageträger 21 vorgesehen, um den Aufbau zu stabilisieren und die Einleitung der Auflagerkraft FK vom zweiten Lagerbereich B2 in die Auflagervorrichtung 3 zu optimieren.

Durch diesen Aufbau wird die auf den zweiten Lagerbereich B2 vom Lastkörper 1 (Bauteil, Kessel) wirkende Auflagerkraft FK über den Auflageträger 21, die Oberkonstruktion 20 und die beiden oberen vertikalen Elemente 19 und das obere vertikale Rückenelement 24 auf die Mittelkonstruktion 11 übertragen. Von der Mittelkonstruktion 11 kann diese Auflagerkraft FK über die Last-Gewindebolzen 9 auf die Unterkonstruktion 4 und über das Kalottenlager 8 auf den Stützträger 2 übertragen werden. Die wirkende Auflagerkraft FK kann dabei über die Verstellung des Last-Gewindebolzens 9 gezielt eingestellt werden, wobei dies in Abstimmung mit der Einstellung weiterer benachbarter Auflagervorrichtungen 3 desselben Lastkörpers 1 erfolgt.

Das Lagern des Lastkörpers 1 erfolgt in einem Einstellvorgang über den Kraftmesser 17 und den Verstell-Gewindebolzen 13 gemäß Fig. 4 beispielsweise wie folgt:
Nachdem der Lastkörper 1 in einem anfänglichen Schritt ST0 stehend mit einer gewählten Anzahl an Auflagervorrichtungen 3 über den jeweiligen Auflageträger 21 in Zusammenwirkung gebracht ist, so dass eine Lastkörperanordnung 100 aus dem Lastkörper 1, den Auflagervorrichtungen 3 und der Trägerkonstruktion mit den Stützträgern 2 ausgebildet ist, werden in einem anschließenden ersten Schritt ST1 die oberen Muttern 10a auf dem Last-Gewindebolzen 9 angezogen und die unteren Muttern 10b auf dem Last-Gewindebolzen 9 gelöst. Dadurch kann die Mittelkonstruktion 11 je nach Einstellung des Verstell-Gewindebolzens 13 gegenüber der Unterkonstruktion 4 zwischen den beiden Muttern 10a, 10b in vertikaler Richtung V bewegt werden.

In einem zweiten Schritt ST2 wird der Verstell-Gewindebolzen 13 gelöst, d.h. in vertikaler Richtung V nach oben bewegt, so dass das untere Ende 13a von dem Lagerelement 16 abhebt oder dieses über die Anbindung 16a mitnimmt. Das Lagerelement 16 wirkt dadurch nicht mehr auf die Unterkonstruktion 4 ein. Durch das Festziehen der oberen Muttern 10a ändert sich die relative Lage zwischen der Mittelkonstruktion 11 und der Unterkonstruktion 4 beim Lösen des Verstell-Gewindebolzens 13 nicht.

In einem dritten Schritt ST3 wird der Kraftmesser 17 zwischen das abgehobene Lagerelement 16 und die Unterkonstruktion 4 in den Verstellbereich 15 eingelegt. Nachfolgend wird der Verstell-Gewindebolzen 13 in einem vierten Schritt ST4 angezogen, d.h. in vertikaler Richtung V nach unten bewegt, so dass das untere Ende 13c gegen das Lagerelement 16 bzw. das über die Anbindung 16a mitgenommene Lagerelement 16 gegen den Kraftmesser 17 gelangt und auf diesen aufdrückt. Der Verstell-Gewindebolzen 13 wird dabei so lange über den Schrauber 14 angezogen, bis sich die oberen Muttern 10a am Last-Gewindebolzen 9 lösen lassen. Ergänzend wird auch sichergestellt, dass die unteren Muttern 10b gelöst sind, falls diese im ersten Schritt ST1 nicht bereits ausreichend gelöst wurden.

Die Schritte ST1 bis ST4 werden für jede Auflagervorrichtung 3 oder für einzelne ausgewählte Auflagervorrichtungen 3 der Lastkörperanordnung 100 einzeln durchgeführt. Unter Umständen wird der vierte Schritt ST4 für einzelne Auflagervorrichtungen 3 wiederholt, falls die Einstellung an einer Auflagervorrichtung 3 Auswirkungen auf die Einstellung einer anderen Auflagervorrichtung 3 der Lastkörperanordnung 100 hat. Damit wird sichergestellt, dass die Last des Lastkörpers 1 in den entsprechenden Anteilen über den Auflageträger 21, die Oberkonstruktion 20, die oberen vertikalen Elemente 19, das obere vertikale Rückenelement 24, die Mittelkonstruktion 11 und den Verstell-Gewindebolzen 13 als Verstellkraft FE auf den jeweiligen Kraftmesser 17 wirkt. Die Kraftmesser 17 messen in dem Fall also die Auflagerkraft FK, die in die jeweilige Auflagervorrichtung 3 über den zweiten Lagerbereich B2 eingeleitet und über den ersten Lagerbereich B1 abgeleitet wird. Diese Auflagerkraft FK kann für jede Auflagervorrichtung 3 nachfolgend eingestellt werden:
In einem fünften Schritt ST5 wird dazu der Verstell-Gewindebolzen 13 über den Schrauber 14 verdreht, bis auf den Kraftmesser 17 eine Verstellkraft FE einwirkt, die einer bestimmten Vorgabekraft FV entspricht. Damit wird ein Soll-Ist-Abgleich durchgeführt. Die Vorgabekraft FV (Soll) wird z.B. vorab für jede Auflagervorrichtung 3 berechnet. Der fünfte Schritt ST5 wird für jede Auflagervorrichtung 3 oder für einzelne ausgewählte Auflagervorrichtungen 3 durchgeführt und unter Umständen auch wiederholt, falls die Einstellung an einer Auflagervorrichtung 3 Auswirkungen auf die Einstellung einer anderen Auflagervorrichtung 3 der Lastkörperanordnung 100 hat. Demnach wird für jede Auflagervorrichtung 3 der Lastkörperanordnung 100 sichergestellt, dass die Vorgabekraft FV innerhalb von Toleranzen gemessen wird.

In einem sechsten Schritt ST6 werden nachfolgend die oberen und die unteren Muttern 10a, 10b aller Last-Gewindebolzen 9 einer Auflagervorrichtung 3 angezogen. Dadurch wird die relative Lage bzw. der Abstand A zwischen der Unterkonstruktion 4 und der Mittelkonstruktion 11 für die jeweilige Auflagervorrichtung 3 fixiert. Anschließend wird in einem siebenten Schritt ST7 der Verstell-Gewindebolzen 13 gelöst. Damit wirkt nunmehr eine Auflagerkraft FK auf die jeweilige Auflagervorrichtung 3, die der Vorgabekraft VF entspricht, da durch das Anziehen der Muttern 10a, 10b der eingestellte Abstand A fixiert ist. Die Auflagerkraft FK wird in diesem Zustand über die Last-Gewindebolzen 9 von der Mittelkonstruktion 11 auf die Unterkonstruktion 9 übertragen und abgeleitet.

In einem anschließenden achten Schritt ST8 wird der Kraftmesser 17 entfernt und stattdessen ein Dummy 23 in den Verstellbereich 15 eingesetzt. Bei einem nachfolgenden Einstellvorgang ist dieser Dummy 23 im Schritt ST3 durch den Kraftmesser 17 wieder zu ersetzen. Grundsätzlich kann der Kraftmesser 17 aber auch dauerhaft eingesetzt bleiben, so dass die Schritte ST2, ST3, ST7 und ST8 entfallen können.

Durch ein Anziehen des Verstell-Gewindebolzens 13 über den Schrauber 14 in einem neunten Schritt ST9 wirkt auf das Lagerelement 16 wieder eine Verstellkraft FE, die aufgrund der Fixierung des Abstandes A über die Muttern 10a, 10b und einem definierten Drehmoment D des Schraubers 14 in etwa der Vorgabekraft VF bzw. der Auflagerkraft FK entspricht. Dadurch wird die Last des Lastkörpers 1 besser verteilt, da diese neben den Last-Gewindebolzen 9 auch über den Verstell-Gewindebolzen 13 von der Mittelkonstruktion 11 auf die Unterkonstruktion 4 übertragen wird.

Die Schritte ST7 bis ST9 werden ebenfalls für jede Auflagervorrichtung 3 bzw. ausgewählte Auflagervorrichtungen 3 durchgeführt.

Grundsätzlich kann das Verfahren in den Schritten ST1 bis ST9 für ausgewählte Auflagervorrichtung 3 der Lastkörperanordnung 100 durchgeführt werden. Beispielsweise können zunächst die Auflagervorrichtungen 3 an einer Seite der Lastkörperanordnung 100 gemäß dem Verfahren eingestellt werden und anschließend die Auflagervorrichtungen 3 an der anderen Seite. Da sich benachbarte Auflagervorrichtungen 3 durch ihre Einstellung gegenseitig beeinflussen können, ist jedoch eine gleichzeitige Verfahrensdurchführung für alle Auflagervorrichtungen 3 bevorzugt.

### Bezugszeichenliste

- 1: Lastkörper, z.B. Kessel
- 2: Stützträger
- 3: Auflagervorrichtung
- 4: Unterkonstruktion
- 4a: plattenförmiger unterer Bereich
- 4b: unterer Steg
- 4c: unterer Zwischenraum
- 4d: Unterseite der Unterkonstruktion
- 4e: Loch
- 5: T-förmiges Element
- 5a: vertikaler Schenkel
- 5b: horizontaler Schenkel
- 6: Abhebesicherung
- 7: Haltebolzen
- 8: Kalottenlager
- 9: Last-Gewindebolzen
- 10a: obere Mutter
- 10b: untere Mutter
- 11: Mittelkonstruktion
- 11a: plattenförmiger mittlerer Bereich
- 11b: mittlerer Steg
- 12: Gewindebohrung
- 13: Verstell-Gewindebolzen
- 13a: oberes Ende des Verstell-Gewindebolzens 13
- 13b: Einkerbungen
- 13c: unteres Ende des Verstell-Gewindebolzens
- 14: Schrauber
- 15: Verstellbereich
- 16: plattenförmiges Lagerelement
- 16a: Anbindung zum Lagerelement 16
- 17: Kraftmesser
- 18: unteres vertikales Element
- 18a: unteres Ende des unteren vertikalen Elementes 18
- 19: oberes vertikales Element
- 20: Oberkonstruktion
- 21: Auflageträger
- 22: Stützflächen
- 23: Dummy
- 24: oberes vertikales Rückenelement
- 25: unteres vertikales Rückenelement
- 100: Lastkörperanordnung

- A: Abstand
- B1: erster Lagerbereich
- B2: zweiter Lagebereich
- D: Drehmoment
- FE: Verstellkraft
- FK: Auflagerkraft
- FV: Vorgabekraft
- H: horizontale Ebene
- ST0-ST9: Schritte des Verfahrens

## Patentansprüche

1. Auflagervorrichtung (3) zum Lagern eines Lastkörpers (1), beispielsweise eines Kessels, insbesondere eines Kessels einer Müllverbrennungsanlage, mit einer Unterkonstruktion (4) und einer demgegenüber in vertikaler Richtung (V) verstellbaren Mittelkonstruktion (11), wobei die Unterkonstruktion (4) mit einem ersten Lagerbereich (B1) zusammenwirkt zum Ableiten einer von dem Lastkörper (1) über einen zweiten Lagerbereich (B2) in die Mittelkonstruktion (11) einleitbaren Auflagerkraft (FK) in eine Tragkonstruktion (2),
wobei die Auflagervorrichtung (3) Lastelemente (4e, 9, 10a, 10b) und Verstellelemente (12, 13, 13c, 16, 17, 23) umfasst, wobei die in die Mittelkonstruktion (11) einleitbare Auflagerkraft (FK) über die Lastelemente (4e, 9, 10a, 10b) und/oder über die Verstellelemente (12, 13, 13c, 16, 17, 23) in vertikaler Richtung (V) auf die Unterkonstruktion (4) übertragbar ist,
wobei über die Verstellelemente (12, 13, 13c, 16, 17, 23) ein Abstand (A) in vertikaler Richtung (V) zwischen der Unterkonstruktion (4) und der Mittelkonstruktion (11) verstellbar ist und über die Lastelemente (4e, 9, 10a, 10b) ein über die Verstellelemente (12, 13, 13c, 16, 17, 23) eingestellter Abstand (A) zwischen der Unterkonstruktion (4) und der Mittelkonstruktion (11) fixiert werden kann zum Festlegen der auf die Auflagervorrichtung (3) wirkenden Auflagerkraft (FK).
**dadurch gekennzeichnet, dass**
die Lastelemente jeweils
- durch ein mit der Mittelkonstruktion (11) fest verbundenen Last-Gewindebolzen (9) ausgebildet sind, wobei der Last-Gewindebolzen (9) verschieblich in einem Loch (4e) in der Unterkonstruktion (4) gelagert ist und der zum Fixieren des Abstandes (A) formschlüssig mit der Unterkonstruktion (4) verbindbar ist und/oder
- durch ein mit der Unterkonstruktion (4) fest verbundenen Last-Gewindebolzen (9) ausgebildet sind, wobei der Last-Gewindebolzen (9) verschieblich in einem Loch in der Mittelkonstruktion (11) gelagert ist und der zum Fixieren des Abstandes (A) formschlüssig mit der Mittelkonstruktion (11) verbindbar ist.

2. Auflagervorrichtung (3) nach Anspruch 1, **dadurch gekennzeichnet, dass** die formschlüssige Verbindung zum Fixieren des Abstandes (A) über auf dem Last-Gewindebolzen (9) aufgeschraubte Muttern (10a, 10b) bewirkt wird, wobei die Muttern (10a, 10b) die Unterkonstruktion (4) bzw. die Mittelkonstruktion (11) zwischen sich einschließen zum Verhindern einer Bewegung der Unterkonstruktion (4) gegenüber der Mittelkonstruktion (11) in vertikaler Richtung (V).

3. Auflagervorrichtung (3) nach einem der vorhergehenden Ansprüche, **dadurch gekennzeichnet, dass** die Verstellelemente jeweils durch einen in eine Gewindebohrung (12) in der Mittelkonstruktion (11) eingeschraubten Verstell-Gewindebolzen (13) ausgebildet sind, wobei der Verstell-Gewindebolzen (13) durch eine Verdrehung gegenüber der Gewindebohrung (12) mit einem unteren Ende (13c) in vertikaler Richtung (V) mit einer Verstellkraft (FE) auf die Unterkonstruktion (4) einwirken kann zum gezielten Verstellen des Abstandes (A) zwischen der Unterkonstruktion (4) und der Mittelkonstruktion (11) durch Einwirken des unteren Endes (13c) mit der Verstellkraft (FE) auf die Unterkonstruktion (4).

4. Auflagervorrichtung (3) nach Anspruch 3, **dadurch gekennzeichnet, dass** das untere Ende (13c) über ein flächiges Lagerelement (16) mit der Verstellkraft (FE) auf die Unterkonstruktion (4) einwirkt zum flächigen Verteilen der wirkenden Verstellkraft (FE).

5. Auflagervorrichtung (3) nach Anspruch 4, **dadurch gekennzeichnet, dass** die auf die Unterkonstruktion (4) einwirkende Verstellkraft (FE) über einen zwischen dem flächigen Lagerelement (16) und der Unterkonstruktion (4) einbringbaren Kraftmesser (17) messbar ist.

6. Auflagervorrichtung (3) nach einem der Ansprüche 3 bis 5, **dadurch gekennzeichnet, dass** ein oberes Ende (13a) des Verstell-Gewindebolzens (13) Einkerbungen (13b) aufweist zum Aufnehmen eines Schraubers (14) zum Verdrehen des Verstell-Gewindebolzens (13) mit einem einstellbaren Drehmoment (D) zum gezielten Einstellen der Verstellkraft (FE).

7. Auflagervorrichtung (3) nach Anspruch 5, **dadurch gekennzeichnet, dass** der Abstand (A) zwischen der Unterkonstruktion (4) und der Mittelkonstruktion (11) derartig über die Verstellelemente (12, 13, 13c, 16, 17, 23) einstellbar und die Lastelemente (4e, 9, 10a, 10b) fixierbar ist, dass die auf die Auflagervorrichtung (3) wirkende Auflagerkraft (FK) einer festgelegten Vorgabekraft (FV) entspricht.

8. Auflagervorrichtung (3) nach einem der vorhergehenden Ansprüche, **dadurch gekennzeichnet, dass** an der Mittelkonstruktion (11) untere vertikale Elemente (18) angeordnet sind, wobei die unteren vertikalen Elemente (18) mit einem unteren Ende (18a) in einen zwischen Stegen (4b) ausgebildeten unteren Zwischenraum (4c) in der Unterkonstruktion (4) ragen und darin in vertikaler Richtung (V) beweglich aufgenommen sind zum Beschränken einer horizontalen Bewegung der Unterkonstruktion (4) gegenüber der Mittelkonstruktion (11).

9. Auflagervorrichtung (3) nach einem der vorhergehenden Ansprüche, **dadurch gekennzeichnet, dass** an einer Unterseite (4d) der Unterkonstruktion (4) ein Kalottenlager (8) angeordnet ist und die Unterkonstruktion (4) über das Kalottenlager (8) mit dem ersten Lagerbereich (B1) zusammenwirkt zum Aufnehmen von Bewegungen aus Wärmedehnungen oder Verformungen in der Umgebung des ersten Lagerbereiches (B1).

10. Auflagervorrichtung (3) nach einem der vorhergehenden Ansprüche, **dadurch gekennzeichnet, dass** an der Mittelkonstruktion (11) in vertikaler Richtung (V) nach oben abragende obere vertikale Elemente (19) angeordnet sind, die mit einer horizontal verlaufenden Oberkonstruktion (20) verbunden sind.

11. Auflagervorrichtung (3) nach Anspruch 10, **dadurch gekennzeichnet, dass** die Oberkonstruktion (20) mit einem Auflageträger (21) verbunden ist, wobei der zweite Lagerbereich (B2) für den Lastkörper (1) auf dem Auflageträger (21) angeordnet ist zum Einleiten einer vom Lastkörper (1) ausgehenden Auflagerkraft (FK).

12. Lastkörperanordnung (100) mit einem Lastkörper (1), beispielsweise einem Kessel, insbesondere einem Kessel einer Müllverbrennungsanlage, mehreren Auflagervorrichtungen (3), insbesondere nach einem der vorhergehenden Ansprüche, und einer Tragkonstruktion (2), wobei der Lastkörper (1) mit einer Auflagerkraft (FK) über zweite Lagerbereiche (B2) auf die mehreren Auflagervorrichtungen (3) einwirkt,
wobei die Auflagervorrichtungen (3) jeweils eine Unterkonstruktion (4) und eine demgegenüber in vertikaler Richtung (V) verstellbare Mittelkonstruktion (11) aufweisen, wobei die Unterkonstruktion (4) mit einem ersten Lagerbereich (B1) zusammenwirkt zum Ableiten der in die Mittelkonstruktion (11) der jeweiligen Auflagervorrichtung (3) über den jeweiligen zweiten Lagerbereich (B2) eingeleiteten Auflagerkraft (FK) in die Tragkonstruktion (2),
wobei die jeweilige Auflagervorrichtung (3) Lastelemente (4e, 9, 10a, 10b) und Verstellelemente (12, 13, 13c, 16, 17, 23) umfasst,
wobei die in die Mittelkonstruktion (11) der jeweiligen Auflagervorrichtung (3) eingeleitete Auflagerkraft (FK) über die Lastelemente (4e, 9, 10a 10b) und/oder über die Verstellelemente (12, 13, 13c, 16, 17, 23) in vertikaler Richtung (V) auf die Unterkonstruktion (4) der jeweiligen Auflagervorrichtung (3) übertragbar ist,
wobei über die Verstellelemente (12, 13, 13c, 16, 17, 23) ein Abstand (A) in vertikaler Richtung (V) zwischen der Unterkonstruktion (4) und der Mittelkonstruktion (11) der jeweiligen Auflagervorrichtung (3) verstellbar ist und über die Lastelemente (4e, 9, 10a, 10b) ein über die Verstellelemente (12, 13, 13c, 16, 17, 23) eingestellter Abstand (A) zwischen der Unterkonstruktion (4) und der Mittelkonstruktion (11) der jeweiligen Auflagervorrichtung (3) fixiert werden kann zum individuellen Einstellen und Festlegen der von dem Lastkörper (1) auf die jeweilige Auflagervorrichtung (3) der Lastkörperanordnung (100) einwirkenden Auflagerkraft (FK)
**dadurch gekennzeichnet, dass**
die Lastelemente jeweils
- durch ein mit der Mittelkonstruktion (11) fest verbundenen Last-Gewindebolzen (9) ausgebildet sind, wobei der Last-Gewindebolzen (9) verschieblich in einem Loch (4e) in der Unterkonstruktion (4) gelagert ist und der zum Fixieren des Abstandes (A) formschlüssig mit der Unterkonstruktion (4) verbindbar ist und/oder
- durch ein mit der Unterkonstruktion (4) fest verbundenen Last-Gewindebolzen (9) ausgebildet sind, wobei der Last-Gewindebolzen (9) verschieblich in einem Loch in der Mittelkonstruktion (11) gelagert ist und der zum Fixieren des Abstandes (A) formschlüssig mit der Mittelkonstruktion (11) verbindbar ist.

13. Lastkörperanordnung (100) nach Anspruch 12, **dadurch gekennzeichnet, dass** die mehreren Auflagervorrichtungen (3) über Abhebesicherungen (6) vor einem Abheben in vertikaler Richtung (V) von der Tragkonstruktion (2) gesichert sind, beispielsweise über T-förmige Elemente (5), die an der Tragkonstruktion (2) befestigt sind.

14. Lastkörperanordnung (100) nach Anspruch 12 oder 13, **dadurch gekennzeichnet, dass** die mehreren Auflagervorrichtungen (3) jeweils ein Kalottenlager (8) aufweisen, wobei das Kalottenlager (8) den Übergang zur Tragkonstruktion (2) in dem ersten Lagerbereich (B1) bildet.

15. Verfahren zum Einstellen einer auf Auflagervorrichtungen (3) einer Lastkörperanordnung (100) nach einem der Ansprüche 12 bis 14 wirkenden Auflagerkraft (FK), mit mindestens den folgenden Schritten:
- Verstellen eines Abstands (A) in vertikaler Richtung (V) zwischen der Unterkonstruktion (4) und der Mittelkonstruktion (11) der jeweiligen Auflagervorrichtung (3) über die Verstellelemente (12, 13, 13c, 16, 17, 23) derartig, dass die von dem Lastkörper(1) über den ersten Lagerbereich (B1) in die jeweilige Auflagervorrichtung (3) eingeleitete Auflagerkraft (FK) einer vorab für die jeweilige Auflagervorrichtung (3) festgelegten Vorgabekraft (FV) entspricht;
- Fixieren des über die Verstellelemente (12, 13, 13c, 16, 17, 23) eingestellten Abstandes (A) zwischen der Unterkonstruktion (4) und der Mittelkonstruktion (11) der jeweiligen Auflagervorrichtung (3) über die Lastelemente (4e, 9, 10a, 10b), wenn die Auflagerkraft (FK) in etwa der Vorgabekraft (FV) entspricht zum Festlegen der von dem Lastkörper (1) in die jeweilige Auflagervorrichtung (3) der Lastkörperanordnung (100) eingeleiteten Auflagerkraft (FK),
**dadurch gekennzeichnet, dass**
der über die Verstellelemente (12, 13, 13c, 16, 17, 23) eingestellte Abstand (A) zwischen der Unterkonstruktion (4) und der Mittelkonstruktion (11) der jeweiligen Auflagervorrichtung (3) über die Lastelemente (4e, 9, 10a, 10b) fixiert wird, indem nach dem Einstellen des Abstandes (A) zwischen den Lastelementen (4e, 9, 10a, 10b) und der Unterkonstruktion (4) und/oder zwischen den Lastelementen (4e, 9, 10a, 10b) und der Oberkonstruktion (11) eine formschlüssige Verbindung ausgebildet wird.

16. Verfahren nach Anspruch 15, **dadurch gekennzeichnet, dass** die in die Mittelkonstruktion (11) der jeweiligen Auflagervorrichtung (3) eingeleitete Auflagerkraft (FK) beim Verstellen des Abstandes (A) über die Verstellelemente (12, 13, 13c, 16, 17, 23) lediglich über die Verstellelemente (12, 13, 13c, 16, 17, 23) in vertikaler Richtung (V) auf die Unterkonstruktion (4) der jeweiligen Auflagervorrichtung (3) übertragen wird, wobei die über die Verstellelemente (12, 13, 13c, 16, 17, 23) in vertikaler Richtung (V) auf die Unterkonstruktion (4) übertragene Auflagerkraft (FK) beim Verstellen des Abstandes (A) als Verstellkraft (FE) von einem Kraftmesser (17) gemessen und die Verstellkraft (FE) mit der Vorgabekraft (FV) verglichen wird.

17. Verfahren nach Anspruch 16, **dadurch gekennzeichnet, dass** der Kraftmesser (17) vor dem Verstellen des Abstands (A) zwischen die Unterkonstruktion (4) und die Mittelkonstruktion (11) der jeweiligen Auflagervorrichtung (3) gebracht wird, wobei dazu eine Bewegung zwischen der Unterkonstruktion (4) und der Mittelkonstruktion (11) eingeschränkt und die in die Mittelkonstruktion (11) der jeweiligen Auflagervorrichtung (3) eingeleitete Auflagerkraft (FK) ausschließlich über die Lastelemente (4e, 9, 10a, 10b) in vertikaler Richtung (V) auf die Unterkonstruktion (4) der jeweiligen Auflagervorrichtung (3) übertragen wird, und
der Kraftmesser (17) nach dem Fixieren des über die Verstellelemente (12, 13, 13c, 16, 17, 23) eingestellten Abstandes (A) zwischen der Unterkonstruktion (4) und der Mittelkonstruktion (11) der jeweiligen Auflagervorrichtung (3) durch einen Dummy (23) ersetzt wird, wobei dazu die in die Mittelkonstruktion (11) der jeweiligen Auflagervorrichtung (3) eingeleitete Auflagerkraft (FK) ausschließlich über die Lastelemente (4e, 9, 10a, 10b) und nicht über die Verstellelemente (12, 13, 13c, 16, 17, 23) in vertikaler Richtung (V) auf die Unterkonstruktion (4) der jeweiligen Auflagervorrichtung (3) übertragen wird.

18. Verfahren nach einem der Ansprüche 15 bis 17, **dadurch gekennzeichnet, dass** die in die Mittelkonstruktion (11) der jeweiligen Auflagervorrichtung (3) eingeleitete Auflagerkraft (FK) nach dem Fixieren des Abstandes (A) sowohl über die Lastelemente (4e, 9, 10a, 10b) als auch über die Verstellelemente (12, 13, 13c, 16, 17, 23) in vertikaler Richtung (V) auf die Unterkonstruktion (4) der jeweiligen Auflagervorrichtung (3) übertragen wird.

## Claims

1. Supporting device (3) for supporting a load body (1), for example, a boiler, in particular, a boiler of a waste incineration plant, comprising a lower construction (4) and a central construction (11) that can be adjusted relative to the same in the vertical direction (V), wherein the lower construction (4) cooperates with a first bearing region (B1) in order to dissipate a supporting force (FK) that can be introduced into the central construction (11) by the load body (1) via a second bearing region (B2) into a support structure (2),
the supporting device (3) comprising load elements (4e, 9, 10a, 10b) and adjusting elements (12, 13, 13c, 16, 17, 23),
wherein the supporting force (FK) that can be introduced into the central construction (11) can be transmitted onto the lower construction (4) in the vertical direction (V) by the load elements (4e, 9, 10a, 10b) and/or by the adjusting elements (12, 13, 13c, 16, 17, 23), wherein a distance (A) can be adjusted by the adjusting elements (12, 13, 13c, 16, 17, 23) in the vertical direction (V) between the lower construction (4) and the central construction (11), and a distance (A) between the lower construction (4) and the central construction (11) that is adjusted by the adjusting elements (12, 13, 13c, 16, 17, 23) can be fixed by the load elements (4e, 9, 10a, 10b) in order to set the supporting force (FK) acting on the supporting device (3). **characterised in that**
the load elements are each
- formed by a load thread bolt (9) firmly connected to the central construction (11), where the load thread bolt (9) is sliding mounted in a hole (4e) in the lower construction (4) and can be connected to the lower construction (4) by positive locking in order to fix the distance (A), and/or
- formed by a by a load thread bolt (9) firmly connected to the lower construction (4), where the load thread bolt (9) is sliding mounted in a hole in the central construction (11) and can be connected to the central construction (11) by positive locking in order to fix the distance (A).

2. Supporting device (3) according to claim 1, **characterised in that** the positive locking connection for fixing the distances (A) is produced by nuts (10a, 10b) screwed on to the load thread bolt (9), where the nuts (10a, 10b) enclose the lower construction (4) or the central construction (11) respectively in-between themselves in order to prevent movement of the lower construction (4) in relation to the central construction (11) in the vertical direction (V).

3. Supporting device (3) according to one of the above claims, **characterised in that** the adjusting elements are each formed by an adjusting thread bolt (13) screwed into a threaded hole (12) in the central construction (11), where the adjusting thread bolt (13), by rotating against the threaded hole (12) with a lower end (13c), can act on the lower construction (4) in the vertical direction (V) with an adjusting force (FE) in order to purposefully adjust the distance (A) between the lower construction (4) and the central construction (11) by means of the lower end (13c) acting on the lower construction (4) with the adjusting force (FE).

4. Supporting device (3) according to claim 3, **characterised in that** the lower end (13c) acts, via a planar bearing element (16), on the lower construction (4) with the adjusting force (FE) in order to spread the acting adjusting force (FE) over an area.

5. Supporting device (3) according to claim 4, **characterised in that** the adjusting force (FE) acting on the lower construction (4) can be measured via a force gauge (17) that can be introduced between the planar bearing element (16) and the lower construction (4).

6. Supporting device (3) according to one of the claims 3 through 5, **characterised in that** an upper end (13a) of the adjusting thread bolt (13) comprises notches (13b) for receiving a screwdriver (14) for rotating the adjusting thread bolt (13) with an adjustable torque (D) in order to purposefully adjust the adjusting force (FE).

7. Supporting device (3) according to claim 5, **characterised in that** the distance (A) between the lower construction (4) and the central construction (11) can be adjusted via the adjusting elements (12, 13, 13c, 16, 17, 23) and the load elements (4e, 9, 10a, 10b) can be fixed, such that the supporting force (FK) acting on the supporting device (3) corresponds to a defined nominal force (FV).

8. Supporting device (3) according to one of the above claims, **characterised in that** lower vertical elements (18) are arranged on the central construction (11), where the lower end (18a) of the lower vertical elements (18) protrudes into a lower gap (4a) formed in-between bars (4b) in the lower construction (4) and is received therein movable in the vertical direction (V) in order to limit a horizontal movement of the lower construction (4) against the central construction (11).

9. Supporting device (3) according to one of the above claims, **characterised in that** a spherical bearing (8) is arranged on an underside (4d) of the lower construction (4), and the lower construction (4) cooperates via the spherical bearing (8) with the first bearing region (B1) in order to absorb movement resulting from thermal expansion or deformation in the environment of the first bearing regions (B1).

10. Supporting device (3) according to one of the above claims, **characterised in that** upper vertical elements (19) projecting upwards in the vertical direction (V) are arranged on the central construction (11) which are connected to an upper construction (20) extending horizontally.

11. Supporting device (3) according to claim 10, **characterised in that** the upper construction (20) is connected to a support beam (21), where the second bearing region (B2) for the load body (1) is arranged on the support beam (21) in order to introduce a supporting force (FK) emanating from the load body (1).

12. Load body arrangement (100) including a load body (1), for example, a boiler, in particular, a boiler of a waste incineration plant, multiple supporting means (3), in particular, according to one of the above claims, and a support structure (2), wherein the load body (1) acts on the multiple supporting means (3) with a supporting force (FK) via second bearing regions (B2),
where the supporting means (3) each comprise a lower construction (4) and a central construction (11) adjustable in relation there to in the vertical direction (V), where the lower construction (4) cooperates with a first bearing region (B1) in order to deflect the supporting force (FK), introduced into the central construction (11) of the respective supporting device (3) via the respective second bearing region (B2), into the support structure (2),
where the respective supporting device (3) comprises load elements (4e, 9, 10a, 10b) and adjusting elements (12, 13, 13c, 16, 17, 23), where the supporting force (FK) introduced into the central construction (11) of the respective supporting device (3) can be transmitted via the load elements (4e, 9, 10a, 10b) and/or via the adjusting elements (12, 13, 13c, 16, 17, 23) in the vertical direction (V) to the lower construction (4) of the respective supporting device (3), where a distance (A) between the lower construction (4) and the central construction (11) of the respective supporting device (3) can be adjusted in the vertical direction (V) by the adjusting elements (12, 13, 13c, 16, 17, 23), and, via the load elements (4e, 9, 10a, 10b), a distance (A) between the lower construction (4) and the central construction (11) of the respective supporting device (3) that is set via the adjusting elements (12, 13, 13c, 16, 17, 23) can be fixed in order to individually adjust and determine the supporting force (FK) exerted by the load body (1) on the respective supporting device (3) of the load body arrangement (100),
**characterised in that**
the load elements each
- are formed by a load thread bolt (9) firmly connected to the central construction (11), where the load thread bolt (9) is sliding mounted in a hole (4e) in the lower construction (4) and can be connected to the lower construction (4) by positive locking in order to fix the distance (A) and/or
- are formed by a load thread bolt (9) firmly connected to the lower construction (4), where the load thread bolt (9) is sliding mounted in a hole in the central construction (11) and can be connected to the central construction (11) by positive locking in order to fix the distance (A).

13. Load body arrangement (100) according to claim 12, **characterised in that** the multiple supporting means (3) are secured against lifting off from the support structure (2) in the vertical direction (V) by lift-off restraints (6), for example, T-shaped elements (5), mounted on the support structure (2).

14. Load body arrangement (100) according to claim 12 or 13, **characterised in that** the multiple supporting means (3) each comprise a spherical bearing (8), the spherical bearing (8) forming the transition to the support structure (2) in the first bearing region (B1).

15. Method for adjusting a supporting force (FK) acting on supporting means (3) of a load body arrangement (100) according to one of the claims 12 through 14, including at least the following steps:
- adjusting a distance (A) in the vertical direction (V) between the lower construction (4) and the central construction (11) of the respective supporting device (3) via the adjusting elements (12, 13, 13c, 16, 17, 23) such that the supporting force (FK) introduced from the load body(1) via the first bearing region (B1) into the respective supporting device (3) corresponds to a nominal force (FV) determined in advance for the respective supporting device (3);
- fixing the distance (A) adjusted via the adjusting elements (12, 13, 13c, 16, 17, 23) between the lower construction (4) and the central construction (11) of the respective supporting device (3) via the load elements (4e, 9, 10a, 10b), when the supporting force (FK) approximates the nominal force (FV) in order to fix the supporting force (FK) introduced from the load body (1) into the respective supporting device (3) of the load body arrangement (100),
**characterised in that**
the distance (A) between the lower construction (4) and the central construction (11) of the respective supporting device (3) adjusted by the adjusting elements (12, 13, 13c, 16, 17, 23) is fixed via the load elements (4e, 9, 10a, 10b) **in that** after setting the distance (A) between the load elements (4e, 9, 10a, 10b) and the lower construction (4) and/or between the load elements (4e, 9, 10a, 10b) and the upper construction (11) a positive locking connection is formed.

16. Method according to claim 15, **characterised in that**, upon adjusting the distance (A) via the adjusting elements (12, 13, 13c, 16, 17, 23), the supporting force (FK) introduced into the central construction (11) of the respective supporting device (3) is transmitted onto the lower construction (4) of the respective supporting device (3) merely via the adjusting elements (12, 13, 13c, 16, 17, 23) in the vertical direction (V), where, upon adjusting the distance (a), the supporting force (FK) transmitted via the adjusting elements (12, 13, 13c, 16, 17, 23) in the vertical direction (V) into the lower construction (4) is measured as adjusting force (FE) by a force gauge (17) and the adjusting force (FE) is compared to the nominal force (FV).

17. Method according to claim 16, **characterised in that**, prior to adjusting the distance (A), the force gauge (17) is positioned between the lower construction (4) and the central construction (11) of the respective supporting device (3), where, to that end, a movement between the lower construction (4) and the central construction (11) is limited and the supporting force (FK) introduced into the central construction (11) of the respective supporting device (3) is transmitted to the lower construction (4) of the respective supporting device (3) exclusively via the load elements (4e, 9, 10a, 10b) in the vertical direction (V), and, after fixing the distance (A) between the lower construction (4) and the central construction (11) of the respective supporting device (3) set by means of the adjusting elements (12, 13, 13c, 16, 17, 23), the force gauge (17) is replaced by a dummy (23), where, to that end, the supporting force (FK) introduced into the central construction (11) of the respective supporting device (3) is transmitted to the lower construction (4) of the respective supporting device (3) exclusively via the load elements (4e, 9, 10a, 10b) and not via the adjusting elements (12, 13, 13c, 16, 17, 23) in the vertical direction (V).

18. Method according to one of the claims 15 bis 17, **characterised in that**, after fixing the distance (A), the supporting force (FK) introduced into the central construction (11) of the respective supporting device (3) is transmitted to the lower construction (4) of the respective supporting device (3) both via the load elements (4e, 9, 10a, 10b) as well as via the adjusting elements (12, 13, 13c, 16, 17, 23) in the vertical direction (V).

## Revendications

1. Dispositif d'appui (3) destiné au stockage d'un corps de charge (1), par exemple une chaudière, en particulier d'une chaudière d'une installation d'incinération des déchets, comportant une substructure (4) et, à l'opposé, une structure intermédiaire (11) réglable dans le sens vertical (V), la substructure (4) coopérant avec une première zone de stockage (B1) pour évacuer une force d'appui (FK) pouvant être introduite par le corps de charge (1) dans une structure porteuse (2) via une deuxième zone de stockage (B2) dans la structure intermédiaire (11),
le dispositif d'appui (3) comprenant des éléments de charge (4e, 9, 10a, 10b) et des éléments de réglage (12, 13, 13c, 16, 17, 23), la force d'appui (FK) pouvant être introduite dans la structure intermédiaire (11) via les éléments de charge (4e, 9, 10a, 10b) et/ou via les éléments de réglage (12, 13, 13c, 16, 17, 23) étant transférable dans le sens vertical (V) à la substructure (4), un écart (A) étant réglable dans le sens vertical (V) entre la substructure (4) et la structure intermédiaire (11) et un écart (A) défini entre la substructure (4) et la structure intermédiaire (11) pouvant être fixé via les éléments de réglage (12, 13, 13c, 16, 17, 23) pour déterminer la force d'appui (FK) exercée sur le dispositif d'appui (FK),
**caractérisé en ce que**
les éléments de charge sont respectivement
- conçus sous la forme d'un boulon fileté de charge (9), ledit boulon fileté de charge (9) étant logé coulissant dans un trou (4 e) dans la substructure (4) et peut être relié par coopération des formes à la substructure (4) et/ou
- conçus sous la forme d'un boulon fileté de charge (9) relié de manière fixe à la substructure (4), le boulon fileté de charge (9) étant logé coulissant dans un trou dans la structure intermédiaire (11) et peut être relié par coopération des formes à la structure intermédiaire pour fixer l'écart (A).

2. Dispositif d'appui (3) suivant la revendication 1, **caractérisé en ce que** la liaison par coopération des formes pour fixer l'écart (A) est obtenue via des écrous (10a, 10b) vissés sur le boulon fileté de charge (9), les écrous (10a, 10b) enfermant entre eux la substructure (4), respectivement la structure intermédiaire (11) pour empêcher un déplacement dans le sens vertical (V) de la substructure (4) par rapport à la structure intermédiaire (11).

3. Dispositif d'appui (3) suivant une des revendications précédentes, **caractérisé en ce que** les éléments de réglage sont respectivement conçus sous la forme d'un boulon fileté de réglage (13) vissé dans un alésage fileté (12) dans la structure intermédiaire (11), le boulon fileté de réglage (13) pouvant, par une torsion vis-à-vis de l'alésage fileté (12) agir avec une extrémité inférieure (13c) dans le sens vertical (V) sur la substructure (4) en exerçant une force de réglage (FE) pour régler l'écart (A) entre la substructure (4) et la structure intermédiaire (11) de manière ciblée au moyen de l'action exercée par l'extrémité inférieure (13c) avec une force de réglage (FE) sur la substructure (4).

4. Dispositif d'appui (3) suivant la revendication 3, **caractérisé en ce que** l'extrémité inférieure (13c) agit avec la force de réglage (FE) sur la substructure (4) via un élément de support plat (16) pour répartir en nappe la force de réglage appliquée (FE).

5. Dispositif d'appui (3) suivant la revendication 4, **caractérisé en ce que** la force de réglage (FE) exercée sur la substructure (4) peut être mesurée via un dynamomètre (17) pouvant être introduit entre l'élément de support plat (16) et la substructure (4).

6. Dispositif d'appui (3) suivant une des revendications 3 à 5, **caractérisé en ce qu'**une extrémité supérieure (13a) du boulon fileté de réglage (13) présente des encoches (13b) pour recevoir une visseuse (14) permettant de tourner le boulon fileté de réglage (13) avec un couple réglable (D) pour un réglage ciblé de la force de réglage (FE).

7. Dispositif d'appui (3) suivant la revendication 5, **caractérisé en ce que** l'écart (A) entre la substructure (4) et la structure intermédiaire (11) peut être réglé via les éléments de réglage (12, 13, 13c, 16, 17, 23) et fixé via les éléments de charge (4e, 9, 10a, 10b) de sorte que la force d'appui (FK) exercée sur le dispositif d'appui (3) correspond à une force de consigne (FV) fixée.

8. Dispositif d'appui (3) suivant une des revendications précédentes, **caractérisé en ce que** des éléments verticaux inférieurs (18) sont disposés sur la structure intermédiaire (11), les éléments verticaux inférieurs (18) faisant saillie avec une extrémité inférieure (18a) dans un espace intermédiaire (4c) formé entre des traverses (4b) dans la substructure (4) où ils sont reçus de manière mobile dans le sens vertical (V) pour limiter un déplacement horizontal de la substructure (4) par rapport à la structure intermédiaire (11).

9. Dispositif d'appui (3) suivant une des revendications précédentes, **caractérisé en ce qu'**un palier sous forme de calotte (8) est disposé sur une face inférieure (4d) de la substructure (4) et **en ce que** la substructure (4) coopère via le palier sous forme de calotte (8) avec la première zone de stockage (B1) pour recevoir des mouvements provenant de dilatations thermiques ou de déformations dans l'environnement de la première zone de stockage (B1).

10. Dispositif d'appui (3) suivant une des revendications précédentes, **caractérisé en ce que** des éléments verticaux supérieurs (19) faisant saillie vers le haut sont disposés sur la structure intermédiaire (11) dans le sens vertical (V), lesdits éléments verticaux supérieurs étant reliés à une structure supérieure (20) s'étendant horizontalement.

11. Dispositif d'appui (3) suivant la revendication 10, **caractérisé en ce que** la structure supérieure (20) est reliée à un support d'appui (21), la deuxième zone de stockage (B2) pour le corps de charge (1) étant disposée sur le support d'appui (21) pour introduire une force d'appui (FK) provenant du corps de charge (1).

12. Agencement de corps de charge (100) avec un corps de charge (1), par exemple une chaudière, en particulier une chaudière d'une installation d'incinération des déchets, plusieurs dispositifs d'appui (3), en particulier suivant une des revendications précédentes, et une structure porteuse (2), le corps de charge (1) exerçant une force d'appui (FK) via des deuxièmes zones de stockage (B2) sur les plusieurs dispositifs d'appui (3), les dispositifs d'appui (3) présentant respectivement une substructure (4) et, à l'opposé, une structure intermédiaire (11) réglable dans le sens vertical (V), la substructure (4) coopérant avec une première zone de stockage (B1) pour évacuer la force d'appui (FK) introduite dans la structure intermédiaire (11) du dispositif d'appui respectif (3) via la deuxième zone de stockage respective (B2) dans la structure porteuse (2), le dispositif d'appui respectif (3) comprenant des éléments de charge (4e, 9, 10a, 10b) et des éléments de réglage (12, 13, 13c, 16, 17, 23), la force d'appui (FK) introduite dans la structure intermédiaire (11) du dispositif d'appui respectif (3) pouvant être transférée via les éléments de charge (4 e, 9, 10a, 10b) et/ou via les éléments de réglage (12, 13, 13c, 16, 17, 23) dans le sens vertical (V) à la substructure (4) du dispositif d'appui respectif (3),
un écart (A) dans le sens vertical (V) pouvant être réglé entre la substructure (4) et la structure intermédiaire (11) du dispositif d'appui respectif (3) via les éléments de réglage (12, 13, 13c, 16, 17, 23) et un écart (A) réglé via les éléments de réglage (12, 13, 13c, 16, 17, 23) pouvant être fixé via les éléments de charge (4e, 9, 10a, 10b) entre la substructure (4) et la structure intermédiaire (11) du dispositif d'appui respectif (3) pour un réglage et une détermination individuelle de la force d'appui (FK) exercée par le corps de charge (1) sur le dispositif d'appui respectif (3) de l'agencement de corps de charge (100),
**caractérisé en ce que** les éléments de charge sont respectivement
- conçus sous la forme d'un boulon fileté (9) relié de manière fixe à la structure intermédiaire (11), ledit boulon fileté de charge (9) étant logé coulissant dans un trou (4e) dans la substructure (4) et pouvant être relié par coopération des formes à la substructure (4) pour fixer l'écart (A) et/ou
- conçus par un boulon fileté de charge (9) relié fixement à la substructure (4), le boulon fileté de charge (9) étant logé coulissant dans un trou dans la structure intermédiaire (11) et pouvant être relié par coopération des formes à la structure intermédiaire (11) pour fixer l'écart (A).

13. Agencement de corps de charge (100) suivant la revendication 12, **caractérisé en ce que** les plusieurs dispositifs d'appui (3) sont protégés via des protections anti-soulèvement (6) contre un soulèvement dans le sens vertical (V) de la structure porteuse (2), par exemple via des éléments en forme de T (5) qui sont fixés sur la structure porteuse (2).

14. Agencement de corps de charge (100) suivant la revendication 12 ou 13, **caractérisé en ce que** les plusieurs dispositifs d'appui (3) présentent respectivement un palier sous forme de calotte (8), le palier sous forme de calotte (8) formant la transition vers la structure porteuse (2) dans la première zone de stockage (B1).

15. Procédé de réglage d'une force d'appui (FK) exercée sur des dispositifs d'appui (3) d'un agencement de corps de charge suivant une des revendications 12 à 14 comprenant au moins les étapes suivantes :
- réglage d'un écart (A) dans le sens vertical (V) entre la substructure (4) et la structure intermédiaire (11) du dispositif d'appui respectif (3) via les éléments de réglage (12, 13, 13c, 16, 17, 23) de sorte que la force d'appui (FK) introduite par le corps de charge (1) via la première zone de stockage (B1) dans le dispositif d'appui respectif (3) correspond à une force de consigne (FV) déterminée préalablement pour le dispositif d'appui respectif (3),
- fixation de l'écart (A) réglé via les éléments de réglage (12, 13, 13c, 16, 17, 23) entre la substructure (4) et la structure intermédiaire (11) du dispositif d'appui respectif (3) via les éléments de charge (4e, 9, 10a, 10b), lorsque la force d'appui (FK) correspond à peu près à la force de consigne (FV) pour la détermination de la force d'appui (FK) introduite dans le dispositif d'appui respectif (3) de l'agencement de corps de charge (100),
**caractérisé en ce que**
l'écart (A) entre la substructure (4) et la structure intermédiaire (11) du dispositif d'appui respectif (3) réglé via les éléments de réglage (12, 13, 13c, 16, 17, 23) est fixé via les éléments de charge (4e, 9, 10a, 10b) en formant une liaison par complémentarité des formes après le réglage de l'écart (A) entre les éléments de charge (4e, 9, 10a, 10b) et la substructure (4) et/ou entre les éléments de charge (4e, 9, 10a, 10b) et la structure supérieure.

16. Procédé suivant la revendication 15, **caractérisé en ce que** la force d'appui (FK) introduite dans la structure intermédiaire (11) du dispositif d'appui respectif (3) est transférée lors du réglage de l'écart (A) via les éléments de réglage (12, 13, 13c, 16, 17, 23) uniquement via les éléments de réglage (12, 13, 13c, 16, 17, 23) dans le sens vertical (V) à la substructure (4) du dispositif d'appui respectif (3), la force d'appui (FK) transférée dans le sens vertical (V) via les éléments de réglage (12, 13, 13c, 16, 17, 23) à la substructure (4) du dispositif d'appui respectif (3) étant mesurée par un dynamomètre (17) comme force de réglage (FE) lors du réglage de l'écart (A) et la force de réglage (FE) étant comparée à la force de consigne (FV).

17. Procédé suivant la revendication 16, **caractérisé en ce que** le dynamomètre (17) est disposé entre la substructure (4) et la structure intermédiaire (11) du dispositif d'appui respectif (3) préalablement au réglage de l'écart (A), à cet effet, un mouvement entre la substructure (4) et la structure intermédiaire (11) est limité et la force d'appui (FK) introduite dans la structure intermédiaire (11) du dispositif d'appui respectif (3) étant transférée exclusivement via les éléments de charge (4 e, 9, 10a, 10b) dans le sens vertical (V) à la substructure (4) du dispositif d'appui respectif (3), et après avoir fixé l'écart (A) entre la substructure (4) et la structure intermédiaire (11) du dispositif d'appui respectif (3), le dynamomètre (17) est remplacé par un factice (23), à cet effet, la force d'appui (FK) introduite dans la structure intermédiaire (11) du dispositif d'appui respectif (3) étant exclusivement transférée via les éléments de charge (4e, 9, 10a, 10b) et non pas via les éléments de réglage (12, 13, 13c, 16, 17, 23) dans le sens vertical (V) à la substructure (4) du dispositif d'appui respectif (3).

18. Procédé suivant une des revendications 15 à 17, **caractérisé en ce que** la force d'appui (FK) introduite dans la structure intermédiaire (11) du dispositif d'appui respectif (3) est transférée après la fixation de l'écart (A) non seulement via les éléments de charge (4e, 9, 10a, 10b) mais encore via les éléments de réglage (12, 13, 13c, 16, 17, 23) dans le sens vertical (V) à la substructure (4) du dispositif d'appui respectif (3).
